Europäisches Patentamt

European Patent Office

Office européen des brevets

(11) Veröffentlichungsnummer : **0 027 428**
**B1**

(12) **EUROPÄISCHE PATENTSCHRIFT**

(45) Veröffentlichungstag der Patentschrift :
04.07.84

(51) Int. Cl.³ : **H 02 K   1/18**

(21) Anmeldenummer : **80730064.5**

(22) Anmeldetag : **10.09.80**

(54) **Elektrische Maschine mit einem als Einschieber ausgebildeten Ständerblechpaket.**

(30) Priorität : **10.10.79 DE 2941484**

(43) Veröffentlichungstag der Anmeldung :
**22.04.81 Patentblatt 81/16**

(45) Bekanntmachung des Hinweises auf die Patenterteilung : **04.07.84 Patentblatt 84/27**

(84) Benannte Vertragsstaaten :
**BE CH FR GB LI SE**

(56) Entgegenhaltungen :
**DE-A- 2 513 130**
**DE-B- 2 121 881**
**DE-U- 7 819 560**

(73) Patentinhaber : **SIEMENS AKTIENGESELLSCHAFT**
**Berlin und München Wittelsbacherplatz 2**
**D-8000 München 2 (DE)**

(72) Erfinder : **Günter, Jaap**
**Münchener Strasse 48**
**D-1000 Berlin 30 (DE)**

**Beschreibung**

Die Erfindung bezieht sich auf eine elektrische Maschine mit einem als Einschieber ausgebildetem Ständerblechpaket, das in axialer Richtung mit Hilfe von Druckplatten verspannt, durch am Rücken angeordnete Rippen versteift und in Ringwänden des Gehäuses auf den Außenflächen der Druckplatten gelagert ist.

Eine derartige elektrische Maschine ist aus der DE-OS 16 13 038 bekannt. Bei dieser sind also die radial innenliegenden Stirnflächen der Ringwände des Gehäuses und die radial außenliegenden Stirnflächen der Druckplatten mechanisch maßgenau bearbeitet, wobei der Außendurchmesser der Druckplatten gleich dem Innendurchmesser der Ringwände ist, so daß das Ständerblechpaket mit geringem Spiel in das Gehäuse einbringbar ist. Die Ringwände und Druckplatten stehen sich in axialer Richtung genau gegenüber und sind außerdem mit radial miteinander korrespondierenden Bohrungen versehen, in denen Spannelemente eingebracht sind, die eine Verbindung zwischen Druckplatten und Ringwänden ergeben, so daß das Drehmoment vom Ständerblechpaket auf das Gehäuse übertragen werden kann. Die Anzahl dieser Bohrungen nebst Spannelemente richtet sich nach der Höhe des zu übertragenden Drehmomentes und ihre Herstellung ist verhältnismäßig aufwendig, zumal diese Elemente außerdem die Zentrierung des Ständerblechpaketes übernehmen müssen.

Es ist weiterhin aus dem Buch von Moeller-Werr « Leitfaden der Elektrotechnik », Band 3 « Konstruktion und Festigkeitsberechnungen elektrischer Maschinen », 3. Auflage, 1955, Seite 91, insbesondere Abb. 91. 3, bereits bekannt, die Verbindung zwischen der Ringwand des Gehäuses einer elektrischen Maschine und eine Druckplatte, die mit den Stirnwänden jeweils aneinanderliegen, durch eine Schweißnaht vorzunehmen. Es handelt sich hierbei aber um eine elektrische Maschine normaler Bauart, bei welcher auf der einen Maschinenseite die Ringwand des Gehäuses als Druckplatte verwendet wird, dann wird das Blechpaket in das Gehäuse eingeschichtet, wobei noch zur Versteifung am Blechpaketrücken liegende Rippen vorgesehen sind, und schließlich wird nach dem Zusammenpressen des Blechpaketes die andere Druckplatte mit der zweiten Ringwand des Gehäuses verschweißt. Dabei ist diese Druckplatte zuvor als Ring aus der Ringwand herausgeschnitten gewesen.

Der Erfindung liegt die Aufgabe zugrunde, die Herstellung eines als Einschieber ausgebildeten Ständerblechpaketes einer elektrischen Maschine zu vereinfachen, wobei insbesondere eine gute Zentrierung erreicht werden soll.

Zur Lösung dieser Aufgabe ist eine elektrische Maschine der eingangs beschriebenen Art gemäß der Erfindung so ausgebildet, daß die gegenüber den Ringwänden axial versetzten Druckplatten in den Raum zwischen diese hineinragen und dort mit den Ringwänden verschweißt sind, daß auf einer Maschinenseite die Ringwand an einem Zentrierabsatz in der Druckplatte anliegt und daß in den Seitenwänden des Gehäuses benachbart zu den Schweißnähten zwischen Ringwand und Druckplatte liegende Öffnungen vorgesehen sind. Ein derartig ausgebildeter Einschieber hat den Vorteil einer sehr genauen Zentrierung, die durch die Paßgenauigkeit der mechanisch bearbeiteten Flächen der aneinander liegenden Stirnflächen der Ringwände und der Druckplatten gegeben ist, zumal auf der einen Maschinenseite ein Zentrierabsatz vorgesehen ist. Durch die jeweilige Versetzung der Ringwände gegenüber der Druckplatte stehen die Druckplatten in den Raum zwischen beiden Ringwänden über, wodurch ein guter Ansatzpunkt für eine die Ringwand und Druckplatte verbindende Schweißnaht gegeben ist. Die Wickelköpfe der Ständerwicklung liegen dabei auf der anderen Seite der Ringwand bzw. Druckplatte, so daß beim schweißen keine Beschädigung oder Verschmutzung der Wicklungsisolierung auftreten kann. Der Raum zwischen den Ringwänden ist von der seitlichen Öffnung her zugänglich, die Schweißnaht kann also ohne Schwierigkeiten hergestellt werden.

Es empfiehlt sich, die Umfangslänge der Schweißnähte entsprechend dem Drehmoment zu berechnen, welches als Reaktionsmoment von dem Ständerblechpaket auf das Gehäuse der elektrischen Maschine übertragen werden muß. Entsprechend können sich die Schweißnähte nur entlang eines Teiles des Umfangs erstrecken. In diesem Fall ist es besonders zweckmäßig, an den Enden der Schweißnähte abgerundete Aussparungen in der Druckplatte vorzusehen, wodurch Schrumpfspannungen gemindert werden. Schweißnähte schrumpfen nämlich in Längsrichtung stark, so daß diese Aussparungen am Ende der Schweißnaht die Druckplatte mit einer gewissen Elastizität versehen ist, so daß die Beanspruchungen abgebaut werden.

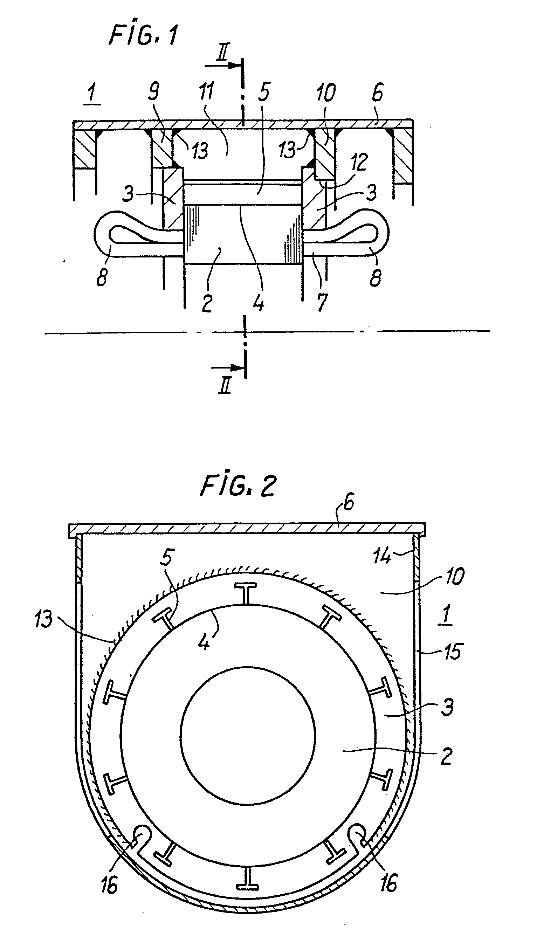

Im folgenden sei die Erfingung noch anhand des in den Fig. 1 und 2 der Zeichnung dargestellten Ausführungsbeispiels näher erläutert. Fig. 1 zeigt schematisch einen Längsschnitt durch den Ständer einer gemäß der Erfindung ausgebildeten elektrischen Maschine, Fig. 2 zeigt einen Schnitt entland der Linie II-II in Fig. 1.

Der Ständer 1 einer elektrischen Maschine, insbesondere eines durch einen Dieselmotor angetriebenen Generators, ist als Einschieber ausgebildet. Das Ständerblechpaket 2 ist dazu zwischen Druckplatten 3 mit nicht dargestellten Mitteln in axialer Richtung verspannt und am Ständerblechpaketrücken 4 sind zur Versteifung T-Träger 5 als Rippen angeordnet. Vor dem Einbau des Einschiebers in das Gehäuse 6 wird die Ständerwicklung 7 eingelegt, deren Wickelköpfe 8 über die Druckplatten 4 hinausragen.

Zur Befestigung des Einschiebers in das Gehäuse 6 dienen dessen Ringwände 9 und 10. Der Abstand zwischen beiden Ringwänden 9, 10 ist größer als die axiale Länge des Ständerblechpaketes 2. Dadurch sind die Druckplatten 3 axial gegenüber den Ringwänden 9 und 10 versetzt und ragen in den Raum 11 zwischen den Ringwänden 9 und 10 hinein. Außerdem weisen die Ringwände 9 und 10 einen unterschiedlichen Innendurchmesser auf, während die Druckplatten 3 angenähert den gleichen Außendurchmesser haben. Auf der einen Maschinenseite entspricht der Innendurchmesser der Ringwand 9 dem Außendurchmesser der Druckplatte 3, so daß diese mit ihren Stirnflächen aneinander liegen, die entsprechend maßgenau mechanisch bearbeitet sind. Auf der anderen Maschinenseite ist der Außendurchmesser der Druckplatte 3 größer als der Innendurchmesser der Ringwand 10 und die Druckplatte 3 ist mit einem Zentrierabsatz 12 versehen, an dem die Stirnfläche der Ringwand 10 anliegt. Der Zentrierabsatz 12 und die Stirnfläche der Ringwand 10 sind ebenfalls maßgenau mechanisch bearbeitet. Die zentrische Lage des Einschiebers gegenüber dem Gehäuse 6 ist durch die Paßgenauigkeit der mechanischen bearbeiteten Stirnflächen gegeben.

Die Druckplatten 3 sind nun mit den Ringwänden 9 und 10 jeweils durch eine Schweißnacht 13 verbunden, die den in den Raum 11 hineinragenden Absatz der Druckplatten 3 als Basis hat. Zur Durchführung der Schweißnähte 13 sind in den Seitenwänden 14 des Gehäuses 6 Öffnungen 15 vorgesehen, die den Schweißnähten 13 benachbart sind. Da die Schweißnähte 13 im Raum 11 zwischen den Ringwänden 9 und 10 angeordnet sind, sind die Wickelköpfe 8 jeweils durch die Ringwände 9, 10 und die Druckplatten 3 geschützt, so daß eine Beschädigung oder eine Verunreinigung der Isolierung der Ständerwicklung 7 beim Einschweißen des Einschiebers in das Gehäuse 6 nicht auftreten kann.

Die Umfangslänge der Schweißnähte 13 bestimmt sich durch die Größe des im Ständer 1 als Rekationsmoment auftretenden Drehmomentes, das von dem Einschieber auf das Gehäuse 6 übertragen werden muß. Sofern sich die Schweißnähte 13 nur entlang eines Teiles des Umfanges erstrecken, ist am Ende der Schweißnaht 13 in der Druckplatte 3 eine abgerundete Aussparung 16 vorgesehen. Durch diese werden die beim Schrumpfen der Schweißnaht 13 auftretenden Schrumpfspannungen herabgesetzt.

Es empfiehlt sich ferner, die Öffnungen 15 in den Seitenwänden 14 des Gehäuses 6 nach Befestigung des Einschiebers in das Gehäuse 6 durch einen Deckel oder ein Gitter zu verschließen. Im letzteren Fall kann man diese Öffnungen 15 als Eintritts- oder Austrittsöffnungen für ein Kühlmedium verwenden.

## Ansprüche

1. Elektrische Maschine mit einem als Einschieber ausgebildetem Ständerblechpaket (2), das in axialer Richtung mit Hilfe von Druckplatten (3) verspannt, durch am Rücken (4) angeordnete Rippen (5) versteift und in Ringwänden (9, 10) des Gehäuses auf den Außenflächen der Druckplatten gelagert ist, dadurch gekennzeichnet, daß die gegenüber den Ringwänden (9, 10) axial versetzten Druckplatten (3) in den Raum (11) zwischen diese hineinragen und dort mit den Ringwänden (9, 10) verschweißt sind, daß auf einer Maschinenseite die Ringwand (10) an einem Zentrierabsatz (12) in der Druckplatte (3) anliegt und daß in den Seitenwänden (14) des Gehäuses (6) benachbart zu den Schweißnähten (13) zwischen Ringwand (9, 10) und Druckplatte (3) liegende Öffnungen (15) vorgesehen sind.

2. Elektrische Maschine nach Anspruch 1, dadurch gekennzeichnet, daß sich die Schweißnähte (13) nur entlang eines Teiles des Umfanges erstrecken.

3. Elektrische Maschine nach Anspruch 2, dadurch gekennzeichnet, daß an den Enden der Schweißnähte (13) abgerundete Aussparungen (16) in der Druckplatte (3) vorgesehen sind.

4. Elektrische Maschine nach Anspruch 1, dadurch gekennzeichnet, daß die Öffnungen (15) in den Seitenwänden (14) des Gehäuses (6) abgedeckt sind.

## Claims

1. An electrical machine having a laminated stator core (2) in the form of an insert, which is braced in the axial direction with the aid of pressure plates (3), is reinforced by ribs (5) arranged at the back (4), and is mounted in annular walls (9, 10) of the housing on the outer surfaces of the pressure plates, characterised in that the pressure plates (3), which are axially displaced relative to the annular walls (9, 10), project into the space (11) between said annular walls and are welded to the latter ; that on one side of the machine, the annular wall (10) rests against a centering shoulder (12) in the pressure plate (3) ; and that in the side walls (14) of the housing (6), there are arranged openings (15) which lie between annular wall (9, 10) and pressure plate (3) adjacent to the welding seams (13).

2. An electrical machine according to Claim 1, characterised in that the welding seams (13) only extend along a part of the periphery.

3. An electrical machine according to Claim 2, characterised in that, at the ends of the welding seams (13), rounded-off recesses (16) are provided in the pressure plate (3).

4. An electrical machine according to Claim 1, characterised in that the openings (15) in the side walls (14) of the housing (6) are covered.

## Revendications

1. Machine électrique comportant un paquet de tôles statorique (2) réalisé sous la forme d'un élément insérable, paquet de tôles statorique qui est serré en direction axiale à l'aide de plaques de pression (3), qui est renforcé par des nervures (5) disposées du côté du dos (4) et qui est monté dans des parois annulaires (9, 10) du carter, sur les surfaces extérieures des plaques de pression, caractérisée par le fait que les plaques de pression (3) qui sont décalées axialement par rapport aux parois annulaires (9, 10), pénètrent dans l'espace (11) situé entre elles et y sont soudées aux parois annulaires (9, 10), que sur un côté de la machine la paroi annulaire (10) porte contre un talon de centrage (12) ménagé dans la plaque de pression (3), et que dans les parois latérales (14) du carter (6), sont prévues des ouvertures (15) qui se situent dans le voisinage des cordons de soudure (13) entre la paroi annulaire (9, 10) et la plaque de pression (3).

2. Machine électrique selon la revendication 1, caractérisée par le fait que les cordons de soudure (13) ne s'étendent que sur une partie de la périphérie.

3. Machine électrique selon la revendication 2, caractérisée par le fait qu'aux extrémités des cordons de soudure (13) sont prévues dans la plaque de pression (3), des encoches arrondies (16).

4. Machine électrique selon la revendication 1, caractérisée par le fait que les ouvertures (15) ménagées dans les parois latérales (14) du carter sont obturées.

FIG. 1

FIG. 2